# EUROPEAN PATENT APPLICATION

(11) **EP 0 534 767 A1**
(43) Date of publication of application: **31.03.1993**
(21) Application number: 92308734.0
(22) Date of filing: 24.09.1992
(51) Int. Cl.: F25D 23/08, B60J 10/08, E06B 7/23

(54) **A retaining device**

(30) Priority: 26.09.1991 US 766431
(71) Applicant: THE STANDARD PRODUCTS COMPANY, Cleveland Ohio 44102 (US)
(72) Inventor: Kiel, Lowell Morris, Seymour, Indiana 47274 (US)
(74) Representative: Jones, Michael Raymond

(57) **Abstract**

There is disclosed a retaining device 22 useful in the assembly of refrigerators, freezers, and other thermally insulated cabinets provided with at least one door (10). The retainer (22) is for use in assembling the shell (12), pan (14), and gasket (20) portions of the door. The retainer clamps the door elements together without requiring separate mechanical fasteners, such as screws or rivets.

The retainer comprises an extruded base (44) and first leg (46) which clip onto the edge of the outer shell (12) of the door. The retainer also has a hinge (58) and a second leg (56) which rotates open to allow placement of the pan (14) of the door. The second leg (56) rotates on the hinge about the longitudinal axis and locks in place to retain the door pan. The retainer (22), for instance in the region of the second leg, is formed with a fastening means (34), (36), which might be a retaining chamber which accepts a flexible dart, to secure the gasket (20) of the door.

## Description

This invention relates to a retaining device for use in the construction of refrigerators, freezers and other thermally insulated containers provided with one or more doors which are adapted to close the access opening of the container. In particular, the present invention relates to a retainer for use in assembling the pan, shell, and gasket portions of the door without the need for separate mechanical fasteners, such as screws or rivets.

A refrigerator door is generally constructed of a metal outer shell, an injection moulded plastics pan (or inner liner), a flexible magnetic gasket, insulation, and means for assembling and fastening these elements. Numerous techniques and devices for assembling the components of a refrigerator door are known, but the known devices generally involve multiple pieces, as well as the use of separate mechanical fasteners. The use of these separate fasteners often requires numerous holes to be drilled. As a result, assembly of the door is a complicated, multiple step operation, and results in low repeatability, high cost, and flaws in manufacture.

Although these conventional methods of attaching the door components have been acceptable to date, it is desirable to provide a simple, one-piece retainer to fasten together the pan, shell, and gasket portions of the door.

According to one aspect of the present invention there is provided a retaining device, comprising:
an elongate base having longitudinal and lateral axes;
a first leg extending substantially parallel to the base, the first leg being connected to the base by a first web portion, the base and the first leg forming a first channel for receiving the flange edge of an outer shell of a door; and
a second leg connected to the base by a second web portion, the second leg and the base forming a second channel for receiving a flange edge of a pan portion of the door, the second channel opening in a substantially opposite direction from the first channel;
wherein the second web portion is formed with a hinge, for allowing the second leg to pivot about a longitudinal axis with respect to the base and the first leg;
wherein the base and the second leg have a locking means capable of preventing pivoting of the second leg about the longitudinal axis, to allow the base and the second leg to secure the pan portion; and
wherein the retaining device is also formed with a fastening means to assist in securing a door gasket to the retaining device.

Preferably the first leg is biased towards the base, with the first web portion acting as a spring, such that in use the base and the first leg provide a clip that grips the outer shell of said door.

Preferably the first leg is formed with at least one anchoring rib extending away from both first leg and the base, the or each anchoring rib being intended in use to be embedded in insulation within the door, so as to tend to prevent removal of the retaining device from the outer shell of the door, and to prevent lateral movement of the retaining device.

Conveniently the base is formed with two lateral ends, the first leg being connected to the first end of the base, the second leg being connected to the second end of the base, and the first leg and the second leg extending laterally in substantially opposite directions.

Preferably the first web portion comprises a first U-shaped member, and the second web portion comprises a second U-shaped member.

Conveniently the hinge comprises a region of the second web portion having reduced wall thickness relative to the base, the first leg, and the second leg.

In a preferred arrangement the locking means comprises a backstop rib and locking rib formed on the base, and a locking rib surface formed on the second leg;
the locking rib and the locking rib surface are formed so as to engage with each other to prevent rotation of the second leg about the longitudinal axis; and
the backstop rib is adapted to prevent lateral deformation of walls extending from the second leg and thus to prevent the locking means from unlocking.

Preferably the locking rib and locking rib surface are formed with cooperating cam surfaces, the cam surfaces being formed so as to enable the locking means to move into a locked position and to prevent the locking means from unlocking.

The locking means may be provided with cooperating cam surfaces, so as to allow disengagement of the locking means.

Another aspect of the present invention provides, in combination, a retaining device in accordance with the first-mentioned aspect of the present invention and a door gasket capable of being secured by the fastening means to the retaining device.

The fastening means may comprise walls forming a chamber and provided with an aperture, the door gasket having a flexible dart, the aperture and chamber being adapted to accept the neck and head of the flexible dart. Alternatively the dart or the like could be carried by the retaining device, with a receptive chamber being carried by the door gasket.

The walls forming the chamber may be provided on, or adjacent to, the second leg.

According to a third aspect of the present invention, there is provided a door comprising a combination according to the second-mentioned aspect of the present invention, an outer shell having a flange edge received in the first channel, a pan having an edge flange received in the second channel, and insulation between the outer shell and the pan.

The insulation may comprise foamable plastics insulation material or may comprise glass fibre batting insulation pressed against the outer shell of the door.

A further aspect of the present invention provides a method assembling a door, comprising the steps of:
clipping an extruded retainer onto an outer shell of the door;
placing a door pan in contact with the retainer;
rotating a leg portion of the retainer with respect to the door shell and the door pan;
locking the leg portion in a closed position to secure the door pan;
attaching a gasket with respect to the retainer; and
at an appropriate stage, inserting insulation between the door pan and the outer shell.

From the foregoing it will be appreciated that the present invention provides a retainer for use in assembling the pan, shell and gasket portions of the door, with the retainer consisting of a single extrudate and requiring no separate fasteners. The use of the retainer of the present invention in assembling a door of a refrigerator or the like is particularly beneficial.

For a better understanding of the present invention and to show how the same may be carried into effect, reference will now be made, by way of example, to the accompanying drawings, in which:-
Figure 1 is a cross-section through an edge region of a door of a refrigerator showing the assembly of the pan, shell, and gasket portions of the refrigerator door, using one embodiment of a retainer according to the present invention;
Figure 2 is a cross-section through the pan and shell portions and through the retainer showing a stage in the construction of a door as shown in Figure 1;
Figure 3 shows, in cross-section, the components as shown in Figure 2 but at a later stage, and with the gasket additionally present;
Figure 4 is a sectional view of an alternative embodiment of the retainer of the present invention; and
Figure 5 is a sectional view of another alternative embodiment of the retainer of the present invention, showing assembly of the gasket portion.

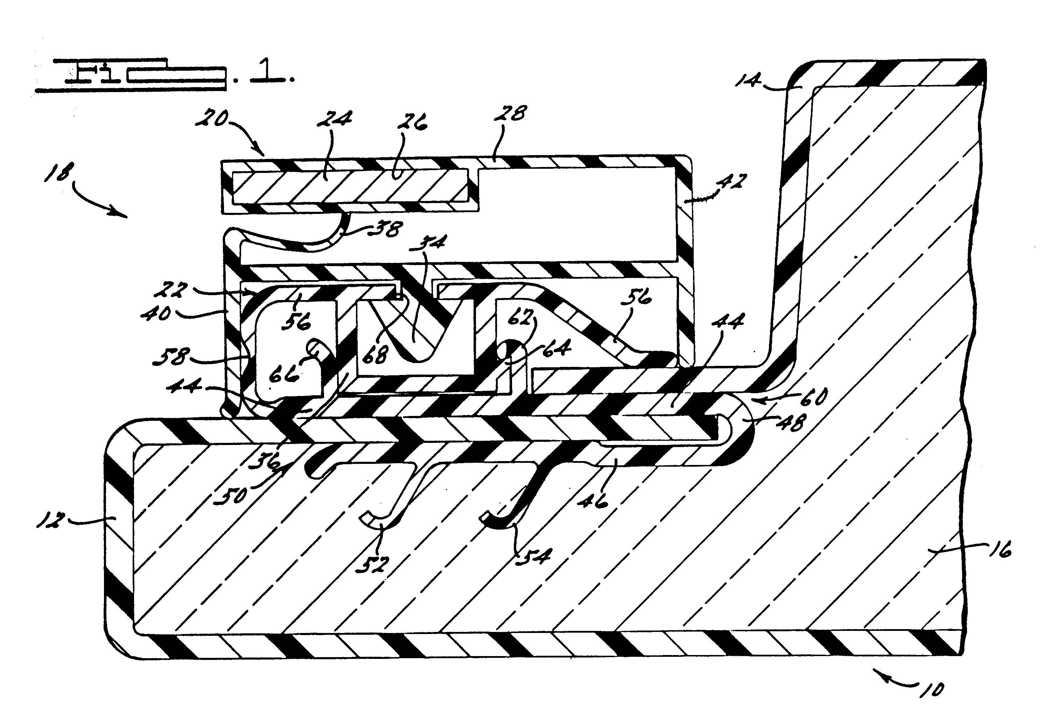

With reference to the drawings, Figure 1 shows a typical refrigerator door 10 which comprises an outer shell portion 12 and an inner liner portion or pan 14. Generally, the shell portion 12 is made of a metal, whereas the pan 14 is made of an injection moulded plastics material. Insulation 16 is inserted into the volume defined by the shell 12 and pan 14. Completing the door 10 is a gasket assembly 18 surrounding the perimeter of the inside of the door 10. It is the gasket assembly 18 which allows the door 10 to be kept in the closed position and yet periodically opened.

In particular, as seen in Figure 1, the gasket assembly 18 comprises an elongated extruded gasket 20 and an elongated extruded retainer 22. The gasket 20 includes a flexible magnet 24 contained within a pocket 26, which has face 28 adapted to contact the outer face of the cabinet. The gasket 20 has a dart portion 34 that is received within a chamber 36 of the retainer 22. Between the dart portion 34 and the magnet-containing pocket 26 is a flexible portion 38, which urges the face 28 into contact with the outer face of the cabinet. Ribs or legs 40 and 42 extend from the main part of the gasket 20 and rest on the shell 12 and pan 14, respectively, and provide support for the gasket 20 when the door 10 is closed.

The retainer 22 fastens the pan 12, shell 14, and gasket 20 without the need for separate mechanical fasteners. The retainer 22 acts as a fastener for use in assembling the shell portion 12 and pan portion 14 of the refrigerator door 10, and additionally provides the means for mounting the gasket 20, to complete the refrigerator door 10.

The retainer extrusion 22 includes a base portion 44. A first leg 46 is formed integrally with the base portion 44, and is connected to the base portion 44 by means of the U-shaped web portion 48. The first leg 46 is spaced apart from the lower face of the base portion 44 and defines with the base portion 44 a first channel 50 into which the flange edge of the shell portion 12 is inserted. In a preferred embodiment of the invention, first leg 46 is biased toward the lower face of the base portion 44, with the U-shaped web portion 48 acting as a spring, so that the base portion 44 and first leg portion 46 provide a U-shaped clip that grips the shell portion 12 inserted therein. The first leg 46 is preferably formed on that side remote from the channel 50 with two anchoring ribs 52 and 54, which extend into the insulation 16 and tend to prevent removal of the retainer 22 from the outer shell 12.

Spaced apart from the upper face of the base portion 44 is a second leg 56. Second leg 56 is formed integrally with the base 44 and may be pivoted with respect to the base 44 about the longitudinal, extruded axis of the retainer by means of a hinge 58. Hinge 58 comprises a U-shaped web portion having a narrower wall thickness than first leg 46, second leg 56, and base 44. In the position shown in Figure 1, the second leg 56 and the base portion 44 together form a second channel 60 that is open in the opposite direction from the first channel 50 for receiving the pan portion 14 of the door 10.

The second leg 56 of the retainer 22 is maintained in the closed, locked position shown in Figure 1 by means of the interengaging lock portions 62 and 64 carried, respectively, by the base portion 44 and one of the walls which define a chamber 36. The wall of the chamber 36 are carried by the second leg 56. The base portion 44 also carries the backstop rib 66, which prevents lateral deformation of the chamber 36.

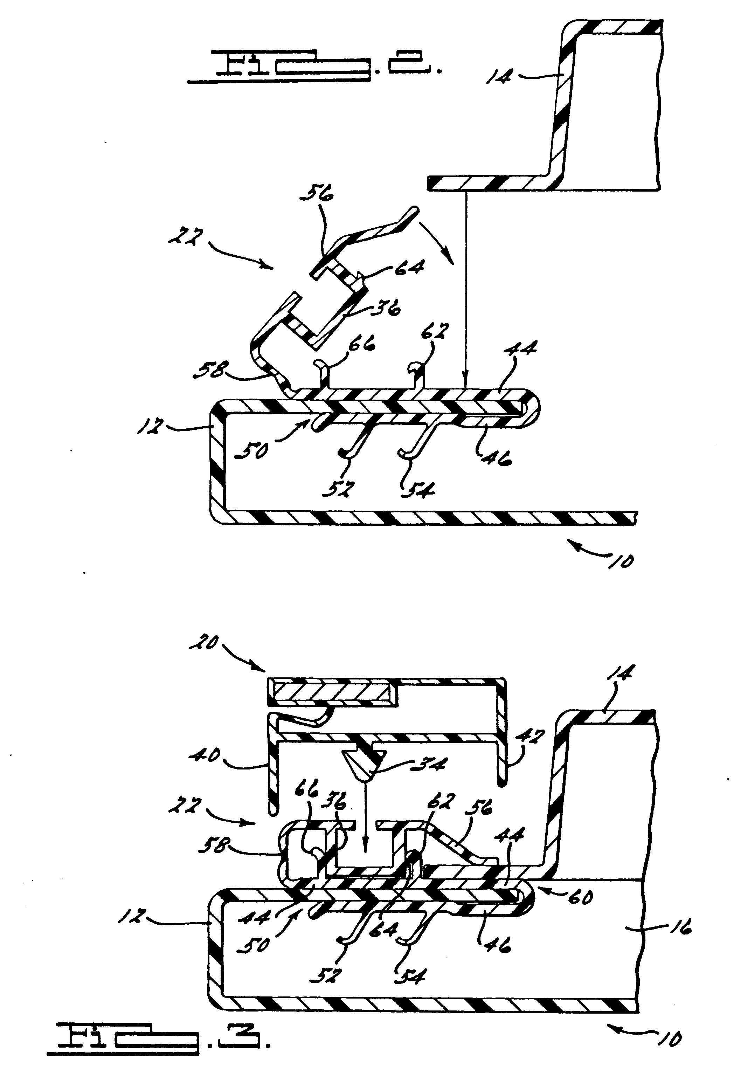

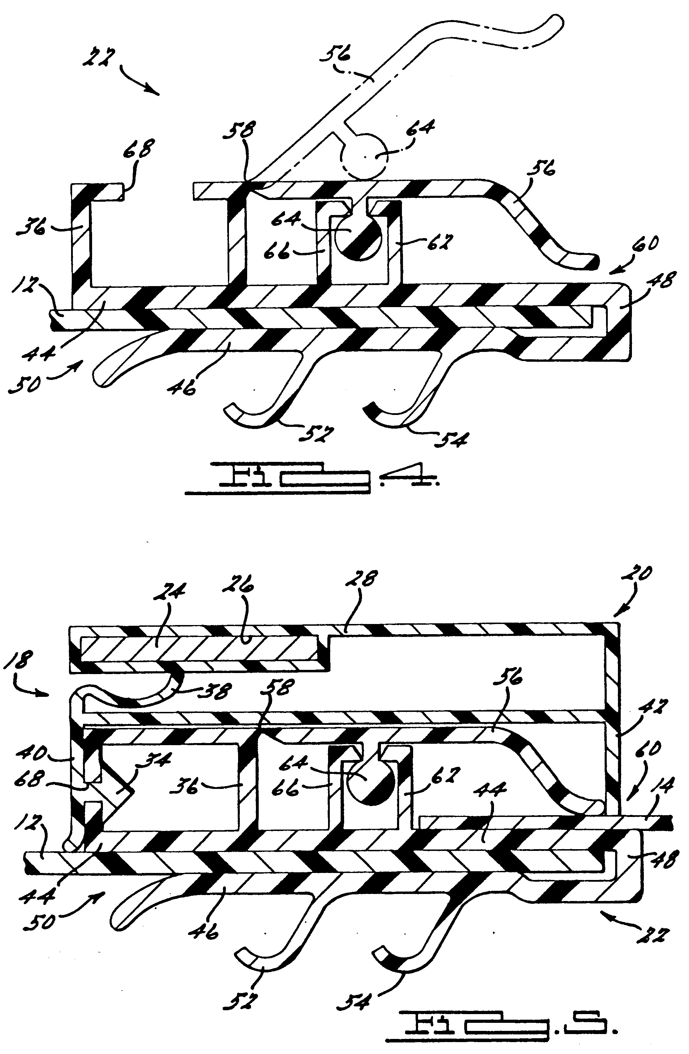

The gasket 20 creates a magnetic seal between the door 10 and a metal component of the cabinet by means of the magnet 24. Force exerted on door 10 to open the door urges the retainer 22 away from gasket extrusion 20 until the magnetic seal is broken. Dart 34 formed on the gasket 20 resists being withdrawn from the chamber 36 by reason of the large size of the base of the dart 34 relative to the size of the opening 68 in the chamber 36. With reference to Figure 5, the gasket extrusion 20 will provide additional resistance, greater than that of the gaskets shown in Figures 1 and 4, to being disengaged from the retainer 22, due to the opening 68 imparting a shear force upon the shaft of the dart 34 when the door 10 is opened.

Figure 1 shows the space between the outer shell 12 and the inner liner or pan 14 as completely filled with insulation 16, such as would result from inserting a foamable plastics insulation material within the interior of the door 10 and causing the foamable material to foam and harden within the door panels 12 and 14. Alternatively, insulation 16 may be provided by glass fibre batting that is pressed against the inside of the door 10. As is known, the batting contacts the inside surfaces of the outer shell 12 and pan 14.

Figures 2 and 3 illustrate the use of the extruded retainer according to the present invention in assembling a refrigerator door. The retainer 22 fits onto the shell portion 12 as shown in Figure 2, with the leading edge of the shell 12 inserted into the first channel 50. Four elongated segments of the retainer extrusion 22 are thus attached to the generally rectangular opening (not shown) in the door's outer shell 12, so as to form a frame around the opening in the outer shell 12. The pan 14 is then placed on the upper surface of the base portion 44, with the locking rib 62 assisting in aligning the pan 14 on the upper surface of the base portion 44. As seen in Figure 2, the second leg 56 is widely spaced from the upper surface of the base portion 44 to allow placement of the pan 14. After the pan 14 is placed on the upper surface of the base portion 44, the second leg 56 is swung towards the base portion 44 in the direction shown by the arrow in Figure 2, rotating about the longitudinal axis of the retainer. When the second leg 56 is swung sufficiently, the locking means 62 and 64 engage, as in the position shown in Figure 3. To facilitate the rotation of the second leg 56 from the open position shown in Figure 2 to the closed, locked position shown in Figure 3, the retainer extrusion 22 has a hinge portion 58 of reduced thickness, which acts as a hinge about which the second leg 56 may be rotated. The top of the locking rib 62 and the bottom of the locking rib surface 64 are provided with cooperating cam surfaces to enable the locking means 62 and 64 to be moved into the locked position shown in Figures 1 and 3, and to prevent the locking means 62 and 64 from unlocking. Backstop rib 66 completes the locking means and prevents lateral deformation of chamber 36 to the left, which might otherwise allow the second leg 56 to become unlocked.

If the insulation 16 is provided by glass fibre batting, then it will need to be in place before the pan 14 is placed upon the upper surface of the base portion 44 as shown in Figure 2. If the insulation 16 is foamed in place, then the foamable mixture will be injected into the door 10 after assembly of the pan 14 to the shell 12 as shown in Figure 3.

After the second leg 56 is locked to the base 44, the gasket extrusion 20 is snapped into the retainer extrusion 22 by forcing the dart 34 into the chamber 36. Gasket extrusion 20 is provided in the form of a square or, more usually, a rectangular frame that is formed by heat welding together serpents of the gasket extrusion 20 that have been provided with mitred corners, as is well known in the art.

Figure 4 shows an alternative embodiment of the retainer 22, in which the dotted line shows the open position of the second leg 56 in the form it assumes when it is extruded. In the embodiment shown in Figure 4, chamber 36 is formed at the end of the base member 44 which is opposite the U-shaped web portion 48. Chamber 36 functions to receive and hold the dart 36 of a gasket extrusion 20. Locking ribs 62 and 66 are carried by the base portion 44 and form cooperating locking means with the longitudinally extending dart or ring 64 carried by the underside of the second leg 56. When the second leg 56 is rotated about the hinge toward the upper surface of the base portion 44, the longitudinally extending ring 64 will force apart the ribs 62 and 66 to permit the ring 64 to be held between the ribs 62 and 66, and thus be locked in place. If it is deemed desirable to provide for disengagement of the locking means 62, 64 and 66, then the locking ribs 62 and 66 can be provided with suitable cam surfaces as shown in Figure 5 to cooperate with the curved surface of the ring 64 so as to allow the ring 64 to be moved between the open, unlocked position shown in dotted line in Figure 4 and the closed, locked position shown in solid line.

The retainer 22 of Figure 5 is similar to the retainer 22 of Figure 4, but modified so that chamber 36 has an opening 68 on the side wall, for entry of dart 34 which is located on the side rib or leg 40. When the door 10 is opened, the forces acting on dart 34 will not be aligned with opening 68. As a result, the opening 68 imposes a shear force on the shaft of the dart on gasket extrusion 20 shown in Figure 5, resulting in greater resistance to being withdrawn from the retainer 22.

## Claims

1. A retaining device, comprising:
an elongate base having longitudinal and lateral axes;
a first leg extending substantially parallel to the base, the first leg being connected to the base by a first web portion, the base and the first leg forming a first channel for receiving the flange edge of an outer shell of a door; and
a second leg connected to the base by a second web portion, the second leg and the base forming a second channel for receiving a flange edge of a pan portion of the door, the second channel opening in a substantially opposite direction from the first channel;
wherein the second web portion is formed with a hinge, for allowing the second leg to pivot about a longitudinal axis with respect to the base and the first leg;
wherein the base and the second leg have a locking means capable of preventing pivoting of the second leg about the longitudinal axis, to allow the base and the second leg to secure the pan portion; and
wherein the retaining device is also formed with a fastening means to assist in securing a door gasket to the retaining device.

2. A retaining device as claimed in claim 1, wherein the first leg is biased towards the base, with the first web portion acting as a spring, such that in use the base and the first leg provide a clip that grips the outer shell of said door.

3. A retaining device as claimed in claim 1 or 2, wherein the first leg is formed with at least one anchoring rib extending away from both first leg and the base, the or each anchoring rib being intended in use to be embedded in insulation within the door, so as to prevent removal of the retaining device from the outer shell of the door, and to prevent lateral movement of the retaining device.

4. A retaining device as claimed in claim 1, 2 or 3, wherein the base is formed with two lateral ends, the first leg being connected to the first end of the base, the second leg being connected to the second end of the base, and the first leg and the second leg extending laterally in substantially opposite directions.

5. A retaining device as claimed in any preceding claim, wherein the first web portion comprises a first U-shaped member, and the second web portion comprises a second U-shaped member.

6. A retaining device as claimed in any preceding claim, wherein the hinge comprises a region of the second web portion having reduced wall thickness relative to the base, the first leg, and the second leg.

7. A retaining device as claimed in any preceding claim, wherein the locking means comprises a backstop rib and locking rib formed on the base, and a locking rib surface formed on the second leg;
the locking rib and the locking rib surface are formed so as to engage with each other to prevent rotation of the second leg about the longitudinal axis; and
the backstop rib is adapted to prevent lateral deformation of walls extending from the second leg and thus to prevent the locking means from unlocking.

8. A retaining device as claimed in claim 7, wherein the locking rib and locking rib surface are formed with cooperating cam surfaces, the cam surfaces being formed so as to enable the locking means to move into a locked position and to prevent the locking means from unlocking.

9. A retaining device as claimed in claim 7, wherein the locking means are provided with cooperating cam surfaces, so as to allow disengagement of the locking means.

10. In combination, a retaining device as claimed in any preceding claim, and a door gasket capable of being secured by the fastening means to the retaining device.

11. The combination as claimed in claim 10, wherein the fastening means comprises walls forming a chamber and provided with an aperture, the door gasket having a flexible dart, the aperture and chamber being adapted to accept the neck and head of the flexible dart.

12. The combination as claimed in claim 11, wherein the walls forming the chamber are provided on, or adjacent, the second leg.

13. A door comprising a combination according to claim 10, 11 or 12, an outer shell having a flange edge received in the first channel, a pan received in the second channel, and insulation between the outer shell and the pan.

14. A door as claimed in claim 13, wherein the insulation comprises foamable plastics insulation material.

15. A door as claimed in claim 13, wherein the insulation comprises glass fibre batting insulation pressed against the outer shell of the door.

16. A method of assembling a door, comprising the steps of:
clipping an extruded retainer onto an outer shell of the door;
placing a door pan in contact with the retainer;
rotating a leg portion of the retainer with respect to the door shell and the door pan;
locking the leg portion in a closed position to secure the door pan;
attaching a gasket with respect to the retainer; and
at an appropriate stage, inserting insulation between the door pan and the outer shell.
